(19) **Europäisches Patentamt**

**European Patent Office**

**Office européen des brevets**

(11) **EP 1 179 602 A1**

(12) # DEMANDE DE BREVET EUROPEEN

(43) Date de publication:
**13.02.2002 Bulletin 2002/07**

(51) Int Cl.⁷: **C21C 5/46**, C21C 5/52

(21) Numéro de dépôt: **01401806.3**

(22) Date de dépôt: **05.07.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **07.08.2000 FR 0010393**
**09.11.2000 FR 0014405**

(71) Demandeur: **L'AIR LIQUIDE, SOCIETE ANONYME POUR L'ETUDE ET L'EXPLOITATION DES PROCEDES GEORGES CLAUDE**
**75321 Paris Cédex 07 (FR)**

(72) Inventeurs:
• **Allemand, Bruno**
**75321 Paris cedex 07 (FR)**

• **Champinot, Christel**
**75321 Paris cedex 07 (FR)**
• **Melen, Stéphane**
**75321 Paris cedex 07 (FR)**
• **Vuillermoz, Jean-Claude**
**75321 Paris cedex 07 (FR)**
• **Flichy, Sébastien**
**75321 Paris cedex 07 (FR)**
• **Laurent, Jacky**
**75321 Paris cedex 07 (FR)**

(74) Mandataire: **Vesin, Jacques et al**
**L'Air Liquide, Service Propriété Intellectuelle, 75 Quai d'Orsay**
**75321 Paris Cedex 07 (FR)**

(54) **Procédé d'injection d'un gaz à l'aide d'une tuyère**

(57) Le four à arc électrique est équipé d'un injecteur (10) supersonique comportant une tuyère (20) dite de Laval, disposé à une certaine distance au-dessus du bain. Les dimensions de la tuyère (20) sont calculées en fonction du débit désiré d'oxygène et de la vitesse souhaitée du jet, et la pression de l'oxygène à l'entrée de la tuyère (20) est telle que la pression statique du jet en sortie de l'injecteur (10) est sensiblement égale à la pression de l'atmosphère environnante.

De préférence, l'injecteur comporte un canal annulaire (13) d'injection de gaz naturel, et, peut être utilisé en mode brûleur au début de la fusion de la ferraille. La vitesse de l'oxygène est alors subsonique.

FIG.1

**Description**

La présente invention concerne l'injection d'un gaz dans un liquide et notamment un métal liquide. Elle s'applique plus particulièrement au domaine des réacteurs métallurgiques, comme les fours de fusion, les convertisseurs de fonte, d'aciers alliés, non-alliés ou de non-ferreux, ainsi que les fours à arc électrique utilisés notamment pour la fabrication de l'acier à partir de ferrailles ou de substituts de ferrailles, et d'une manière générale à toute injection d'un gaz dans un liquide.

Dans la technologie de fabrication de l'acier au four à arc électrique, on réalise la fusion de ferrailles ou de ses substituts en établissant un arc électrique entre les électrodes du four et le métal de manière à apporter de l'énergie pour fondre le métal durant la phase de fusion et le maintenir en fusion durant la phase d'affinage dudit métal.

Durant cette phase d'affinage, on utilise de l'oxygène pour décarburer le métal, et former un laitier dit moussant par réaction de l'oxygène avec le carbone issu du métal ou injecté spécifiquement dans ce but à la surface du bain métallique.

Cette injection d'oxygène peut être réalisée à l'aide de lances de porte consommables ou refroidies à l'eau. Dans ce cas, la lance est montée sur une partie mobile, ce qui entraîne un personnel affecté à son utilisation, et une maintenance élevée. De plus, l'oxygène n'est pas injecté uniformément dans le bain, ce qui est défavorable à des performances élevées du four, le bain de métal n'étant homogène ni en température, ni en composition chimique.

Cette injection peut également être réalisée à l'aide d'injecteurs disposés dans la paroi du four. Cette disposition permet de répartir de façon plus uniforme l'oxygène dans le bain de métal et le laitier et d'augmenter le rendement thermique du four ce qui permet de diminuer les temps d'élaboration de l'acier, de réduire les entrées d'air grâce à une meilleure étanchéité du four (la porte du four peut être fermée grâce à la suppression de la lance de porte). Mais un tel injecteur doit être capable de supporter des charges thermiques élevées sans être détruit prématurément et capable d'injecter l'oxygène dans des conditions telles qu'il puisse atteindre le bain de métal liquide et pénétrer dans celui-ci. La solution évidente pour l'homme de métier consiste à placer l'injecteur d'oxygène à proximité du bain de métal pour être sûr que l'oxygène atteigne ledit bain. Cependant, la proximité du bain de métal engendre une usure prématurée de l'injecteur.

Pour réduire l'usure, l'homme de métier tend à éloigner l'extrémité de la lance de surface, au détriment de la pénétration du jet dans le métal liquide.

Il est connu de GB-A 623 881 d'utiliser une lance d'injection, supersonique pour injecter de l'oxygène à vitesse supersonique pour la décarburation de l'acier en bain liquide. Le problème qui se pose dans ce type d'installation est que le jet d'oxygène s'ouvre à la sortie du nez de l'injecteur, ce qui diminue la force de pénétration du jet dans le bain et augmente les risques d'éclaboussures.

Afin d'améliorer la force de pénétration du jet d'oxygène dans le bain de métal, il est connu de Re 33 464 notamment col. 7, lignes 32 à 41, d'utiliser un jet d'oxygène supersonique et d'entourer ce jet avec une flamme, l'enveloppe de cette flamme s'étendant substantiellement jusqu'à la surface du métal fondu. De tels systèmes seraient susceptibles grâce à la flamme entourant ce jet (et sa haute température), de conserver à ce jet toute sa cohérence en évitant la désintégration de celui-ci. Ainsi de tels systèmes amélioreraient la pénétration de l'oxygène dans le bain.

Si en théorie, il apparaît évident pour l'homme de métier que l'augmentation de la température autour du jet va engendrer une diminution de la densité du milieu ambiant et donc provoquer un effet de résistance moindre de ce milieu par rapport à un milieu moins chaud, ce qui permet en théorie au jet supersonique de rester plus "cohérent", on a cependant constaté qu'en pratique les interactions entre la flamme et le jet, comme par exemple les effets de flottabilité, ont en fait des effets néfastes sur le jet, et réduisent la force de pénétration. Ces effets de flottabilité sont engendrés par le courant chaud d'une flamme dans un milieu plus froid que cette flamme. Ainsi, la flamme qui entoure le jet supersonique et qui traverse un milieu à une température d'environ 1500°C alors que la température de la flamme avoisine 2300°C ou plus, se courbe-t-elle vers le haut, et interagit avec le jet lors de cette remontée, notamment au voisinage du bain, là où justement on aurait pu espérer conserver la "cohérence" du jet supersonique. Or, cette cohérence est en fait détruite.

Il est connu par ailleurs que l'utilisation d'une flamme, créée par un brûleur, dans un four de métallurgie électrique est un complément efficace pour apporter de l'énergie à la charge, et ainsi accroître la vitesse de fusion. L'échange d'énergie entre la flamme et la charge est efficace tant que la surface d'échange est importante, c'est-à-dire tant que les ferrailles ne sont pas fondues, et que l'écart de température entre la flamme et la charge est grand.

Le procédé selon l'invention permet d'éviter ces inconvénients.

Selon l'invention, on réalise un procédé d'injection d'un gaz tel que de l'oxygène, à l'aide d'une tuyère dans un bain de métal liquide contenu dans un récipient métallurgique, ladite tuyère étant installée dans la paroi latérale dudit récipient au-dessus du bain de métal et orientée selon un angle $\alpha$ par rapport à la verticale, l'extrémité aval de la tuyère par où s'échappe le gaz en direction du bain de métal liquide étant située à une distance L de la surface du métal liquide, ladite tuyère étant alimentée par le gaz qui pénètre dans la tuyère par son extrémité amont à une pression P1, et éjecté de la tuyère par son extrémité aval à une pression P2, procédé caractérisé en ce que la pression aval P2 d'éjection du gaz dans le récipient métallurgique et la pression P3 dans le récipient métallurgique sont reliées entre elles par la relation :

$$0,9 \, P3 \leq P2 \leq 1,1 \, P3$$

en ce que la distance L entre l'extrémité avale de la tuyère et la surface du métal liquide est égale à :

$$L \text{ (mètres)} = C * \sqrt{qe} \pm 0,15 \text{ m}$$

Avec

$$C = \sqrt{\frac{4}{\pi * P_2 * M}} \left[ \frac{\gamma}{RTo} \left(1 + \frac{\gamma - 1}{2} M^2\right) \right]^{-1/4} * \left[ 4.2 + 1.1 * \left(M^2 + 1 - \frac{T_j}{T_a}\right) \right] \sqrt{\frac{\rho_j}{\rho_a}}$$

Notation :

$P_2$ **:** pression du jet en sortie (Pa), qui doit être égale à la pression dans le récipient métallurgique. Dans le cas du four à arc, $P_2 = 10^5$ Pa.

**M** : nombre de Mach calculé selon la formule suivante :

$$M^2 = \frac{2}{(\gamma - 1)} * \left[ \left(\frac{P_1}{P_2}\right)^{\left(\frac{\gamma - 1}{\gamma}\right)} - 1 \right]$$

( on peut prendre entre 1.5 correspondant à une pression amont P1 de $3.7.10^5$ Pa et 3.15 pour une pression P1 de $45.10^5$ Pa).

$T_o$ : température de l'oxygène( K) ( en général 294K)

$\gamma$ : rapport $C_p/C_v$, $C_p$ et $C_v$ étant respectivement les capacités thermiques molaires à pression ou volume constant. Pour l'oxygène à To, de l'ordre de 1.4.

**R** : constante des gaz parfaits ( 8.314 / Masse molaire 02)

**qe** : débit massique (kg/s) = ***débit volumique (Nm3/h)\* masse molaire de l'oxygène /3600/0.0224 (l/mol)***

$T_j$, température en sortie de tuyère (K)

$\rho_j$: masse volumique du jet en sortie de tuyere (kg/m$^3$) calculée par :

$$\frac{P_2}{R * T_j}$$

$T_a$, température du milieu ambiant (K)

$\rho_a$ : masse volumique du milieu ambiant (kg/m$^3$) calculée par : $\dfrac{P_3}{R * T_a}$ et en ce que l'injection de gaz est réalisée lorsque la température des gaz dans l'enceinte métallurgique est supérieure à 800°C, de préférence 1000 °C.

De préférence, le gaz injecté sera choisi parmi l'oxygène, l'azote, l'argon, l'hydrogène, le monoxyde de carbone, le dioxyde de carbone, les hydrocarbures et notamment, les alcanes, alcènes, alcynes, le gaz naturel, l'hexafluorure de soufre, ces gaz étant injectés seuls ou en mélanges.

Selon un mode préférentiel de réalisation, la vitesse du gaz lors de son éjection par la tuyère sera supersonique. De préférence également, la tuyère d'injection de gaz est une tuyère comportant d'amont en aval, selon la direction d'entraînement du gaz, une partie amont tronconique convergente suivie d'une partie centrale cylindrique, suivie d'une partie avale tronconique divergente, suivie d'une partie cylindrique débouchant sur l'atmosphère du récipient métallurgique, l'angle $\alpha$ sera de préférence compris entre $30° \leq \alpha \leq 60°$, et plus préférentiellement, $\alpha = 45° \pm 5°$.

Selon un mode de réalisation de l'invention, le procédé est considéré en ce que la tuyère d'injection de gaz est une tuyère comportant d'amont en aval, selon la direction d'entraînement du gaz, une partie amont tronconique convergente suivie d'une partie centrale cylindrique, suivie d'une partie avale tronconique divergente débouchant sur l'atmosphère du récipient métallurgique, le rapport des angles au sommet des cônes respectivement convergent et divergent étant compris entre environ 1,5 et 2,5.

Selon un autre mode de réalisation, le demi-angle au sommet du convergent (21) est compris entre 2 et 12° et le demi-angle au sommet du divergent (23) est compris entre 15° et 35°.

Selon une autre variante de réalisation, le procédé selon l'invention est caractérisé en ce que le débit de gaz est compris entre 50 et 5000 Nm$^3$/h et de préférence entre 1000 et 3500 Nm$^3$/h.

Selon une autre variante, le procédé selon l'invention est caractérisé en ce que la vitesse de la flamme est comprise entre 150 m/s et 300 m/s.

Selon une variante de réalisation de l'invention, le gaz injecté dans le métal sera un hydrocarbure ou un mélange d'hydrocarbures gazeux, de préférence du gaz naturel.

L'injection de gaz, de préférence supersonique sera réalisée, par exemple, en alternance avec l'injection d'une flamme dans le récipient métallurgique depuis une paroi du récipient en direction du métal solide et/ou liquide présent dans le récipient.

Selon une autre variante, l'injection de gaz sera réalisée simultanément avec celle d'une flamme dans le récipient métallurgique depuis une paroi du récipient en direction du métal solide et/ou liquide présent dans le récipient, lorsque l'on souhaitera obtenir simultanément de l'énergie pour chauffer le métal et réaliser une injection de gaz dans le métal (comme par exemple, l'oxygène pour la décarburation).

Le jet de gaz à la sortie de la tuyère sera un jet adapté, c'est-à-dire un jet dont la pression statique en sortie de l'injecteur est égale à la pression régnant dans l'atmosphère traversée par ce jet, à + ou - 10 % environ de cette pression. On a constaté qu'un jet adapté permettait de maintenir, par exemple, une vitesse supersonique du gaz sur la plus grande distance possible, pour une pression de gaz disponible donnée, car on évitait ainsi de créer des ondes de choc qui réduiraient l'énergie cinétique du jet. Un tel jet adapté peut être délivré par un injecteur comportant une tuyère dite de Laval qui présente d'amont en aval un convergent, un col où la vitesse de l'oxygène devient sonique, un divergent où la vitesse de l'oxygène devient supersonique et une partie droite (cylindrique) destinée à stabiliser le jet d'oxygène, c'est-à-dire canaliser le jet et réduire les turbulences. Ladite tuyère est dimensionnée en fonction du débit et de la vitesse de sortie désirés du jet d'oxygène, et la pression de l'oxygène à l'entrée de la tuyère est réglée de telle manière que la pression de sortie du jet soit sensiblement égale à la pression de l'atmosphère environnante (dans le récipient métallurgique, par exemple). La sensible égalité (de préférence, moins de 10% environ de différence) entre ces deux pressions permet de limiter les effets de compression-détente qui se produisent dans le jet supersonique avec d'autant plus d'intensité que la différence de pression est importante. Or, ces effets de compression - détente diminuent considérablement l'énergie cinétique du jet, donc la longueur d'iso-vélocité (longueur sur laquelle le jet garde sa vitesse initiale). Ainsi, par exemple, si l'on diminue de 3 x 10$^5$P la pression nominale d'entrée (amont) du gaz dans la tuyère, ceci entraîne une réduction de la longueur d'iso-vitesse de 35 % environ.

L'utilisation de l'injecteur en mode supersonique est nécessaire pendant les périodes d'affinage de la charge de métal fondu, notamment dans le four électrique à arc. Elle peut toutefois commencer au milieu de la période de fusion de la charge. Sur des fours utilisant des chargements à base de AIS ("Alternative Iron Sources"), le mode supersonique peut être utilisé pendant la totalité de la fusion et l'affinage.

Avantageusement, le ratio des débits d'oxygène délivrés par l'injecteur en mode supersonique et en mode brûleur est sensiblement égal à 5.

Par ailleurs, selon l'art antérieur, tel que décrit dans GB-A-623 881, le positionnement d'une telle tuyère, notamment, supersonique sur les parois du four reposait sur des règles empiriques, conduisant à une efficacité de ce dispositif très aléatoire.

Un autre objet de la présente invention est de pouvoir déterminer, en fonction des paramètres spécifiques du four, et notamment le débit des gaz, les conditions opératoires du four (température et pression), la pression disponible du gaz injecté dans la tuyère, la longueur maximale d'iso-vélocité du jet (c'est-à-dire la longueur maximale où la vitesse du gaz injecté, tel que l'oxygène, reste sensiblement constante à $\pm$ 10 %), et ainsi de pouvoir déterminer le meilleur positionnement de l'injecteur sur les parois du four.

Selon l'invention, cette distance L entre le nez de l'injecteur et la surface du bain de métal, sera égale à :

$$L_m = C * \sqrt{qe} \pm 0,15 \text{ m}$$

Avec

$$C = \sqrt{\frac{4}{\pi * P_2 * M}} \left[ \frac{\gamma}{RTo} (1 + \frac{\gamma - 1}{2} M^2) \right]^{-1/4} * \left[ 4.2 + 1.1 * (M^2 + 1 - \frac{T_j}{T_a}) \right] \sqrt{\frac{\rho_j}{\rho_a}}$$

$P_2$ : pression du jet en sortie (Pa), qui doit être égale à la pression dans le récipient métallurgique. Dans le cas du four à arc, $P_2 = 10^5$ Pa.

$M$ : nombre de Mach calculé selon la formule suivante :

$$M^2 = \frac{2}{(\gamma - 1)} * \left[ \left( \frac{P_1}{P_2} \right)^{(\frac{\gamma - 1}{\gamma})} - 1 \right]$$

( on peut prendre entre 1.5 correspondant à une pression amont P1 de $3.7.10^5$ Pa et 3.15 pour une pression P1 de $45.10^5$ Pa).

$T_o$ : température de l'oxygène( K) ( en général 294K)

$\gamma$ : rapport $C_p/C_v$, Cp et $C_v$ étant respectivement les capacités thermiques molaires à pression ou volume constant. Pour l'oxygène à To, de l'ordre de 1.4.

$R$ : constante des gaz parfaits ( 8.314 / Masse molaire 02)

**qe** : débit massique ( kg/s) = **_débit volumique (Nm3/h)* masse molaire de l'oxygène /3600/0.0224 (l/mol)_**

$T_j$, température en sortie de tuyère (K)

$\rho_j$: masse volumique du jet en sortie de tuyere (kg/m$^3$) calculée par :

$$\frac{P_2}{R * T_j}$$

$T_a$, température du milieu ambiant (K)

$\rho_a$ : masse volumique du milieu ambiant (kg/m$^3$) calculée par : $\frac{P_3}{R * T_a}$

Dans le cas des fours à arc électrique :

$$1,1 < M < 3,5$$

$$1000 \ Nm^3/h < \text{débit volumique} < 20000 \ Nm^3/h$$

$$1400 \ °C \leq T \text{ ambiante } (T° \text{ à l'intérieur du four électrique en affinage}) < 2500 \ °C.$$

Selon une autre variante de l'invention, un injecteur comporte une tuyère qui présente d'amont en aval un convergent, un col où la vitesse de l'oxygène devient sonique, un divergent où la vitesse de l'oxygène devient supersonique et une partie droite (cylindrique) destinée à stabiliser le jet d'oxygène. Ladite tuyère est dimensionnée en fonction du débit et de la vitesse de sortie désirés du jet de gaz, et la pression de gaz à l'entrée de la tuyère étant telle que la pression de sortie du jet est sensiblement égale à la pression de l'atmosphère environnante. La sensible égalité (moins de $10^5$ Pascal de différence) entre ces deux pressions permet de limiter les effets de compression - détente qui se produisent dans le jet généralement supersonique délivré par cette tuyère. Or, ces effets compression-détente diminuent l'énergie cinétique du jet. Il est donc nécessaire de limiter ces effets, d'où la nécessité d'avoir un jet adapté (c'est-à-dire dont la pression statique en sortie est sensiblement égale à la pression de l'atmosphère environnante, à plus ou moins $10^5$ Pascal).

Afin d'éviter la création d'ondes de chocs à l'intérieur de la tuyère, cette dernière présente, de préférence, des surfaces de raccordement arrondies selon des spécifications bien précises décrites ci-après, respectivement entre le convergent et le col, le col et le divergent, le divergent et la partie droite.

Selon une autre caractéristique de l'invention, on accélère le début de la fusion du métal en brûlant un combustible, tel que par exemple un gaz naturel pendant la période de fusion des ferrailles, ce gaz naturel étant introduit, par exemple, par un canal annulaire entourant la tuyère, l'oxygène nécessaire pour la combustion du gaz naturel étant injecté par la tuyère. Pendant cette phase, on injecte l'oxygène à une pression beaucoup plus basse à l'entrée de celle-ci, de sorte que celui-ci soit éjecté par la tuyère à une vitesse subsonique. Afin de créer une flamme stable entre l'oxygène, injecté à une vitesse comprise entre 100 m/s et environ 300 m/s d'une part et le combustible tel que le gaz naturel, injecté à une vitesse généralement beaucoup plus basse, par exemple entre 30 m/s et 150 m/s environ, on réalise le mélange du combustible et du carburant dans une chambre de combustion.

Cette disposition présente notamment l'avantage par rapport aux dispositifs et procédés dans lesquels une flamme entoure le jet supersonique, de faire fonctionner l'injecteur en mode lance (un seul fluide injecté) ou en mode brûleur (deux fluides injectés) avec uniquement deux alimentations gazeuses (l'une pour l'oxygène, l'autre pour le gaz naturel) au lieu de trois alimentations gazeuses nécessaires dans les dispositifs et procédés connus.

Bien entendu, les procédés et appareils selon l'invention présentent, outre les avantages mentionnés ci-avant, à savoir une injection supersonique, quand cela est nécessaire, sans onde de choc, donc ayant une meilleure pénétration dans le jet de métal les avantages ci-après : pour une pénétration égale dans le métal fondu, il est possible de placer l'extrémité de la lance beaucoup plus loin de la surface du bain de métal qu'une lance normale (sans flamme). Pour une pénétration égale dans le métal fondu, il est possible de placer cette lance selon l'invention à une distance similaire à la distance à laquelle on place une lance entourée d'une flamme (telle que décrit dans Re 33 464) sans avoir besoin de cette flamme pour y parvenir, ce qui permet de réelles économies de consommation de gaz pour le client, à performances égales.

L'invention sera mieux comprise à l'aide des exemples de réalisation suivants, donnés à titre non limitatif, conjointement avec les figures, qui représentent:

-    la figure 1, une vue en coupe d'un injecteur supersonique d'oxygène utilisé pour la mise en oeuvre du procédé selon l'invention ;
-    la figure 2, une coupe de la tuyère dite de Laval selon l'invention ;
-    la figure 3, une vue en coupe d'un four à arc électrique et l'implantation de l'injecteur supersonique sur ce four ;
-    la figure 4, une vue de dessus du four de la figure 3 ;
-    la figure 5, les courbes représentatives des débits d'oxygène et de gaz naturel en fonction du temps pour un cycle d'élaboration d'un acier ;
-    la figure 6, les courbes représentatives des débits d'oxygène et de gaz naturel en fonction du temps pour un autre type de cycle d'élaboration d'un acier ; et
-    la figure 7, un schéma de principe, vu de dessus, du montage de l'injecteur sur une paroi de four.

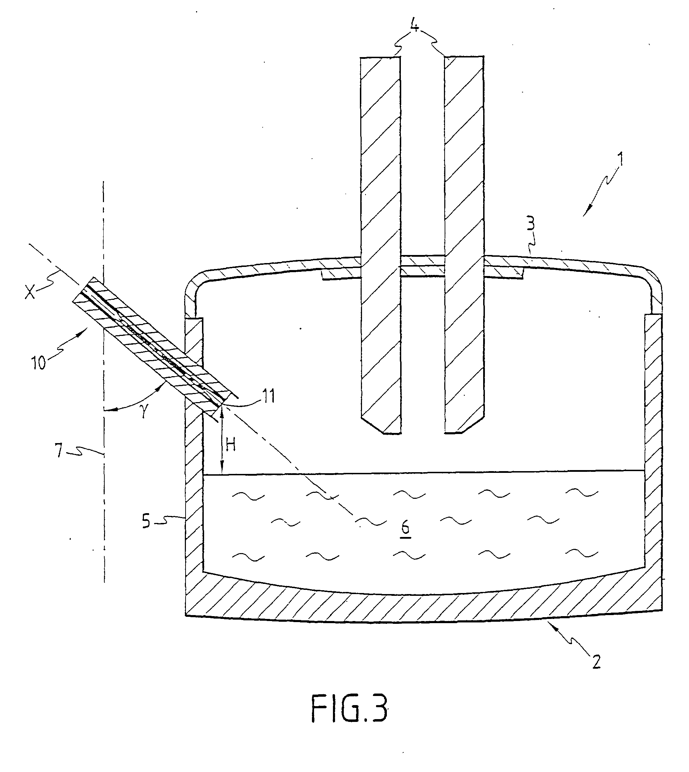

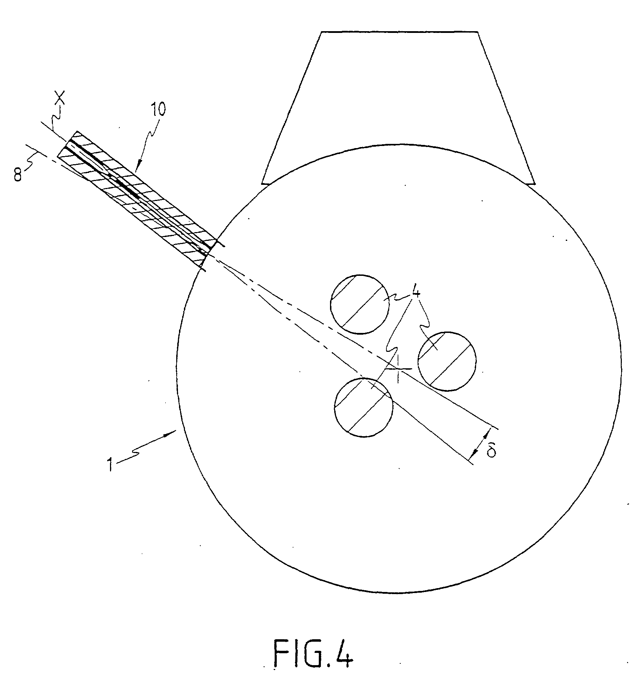

Les figures 3 et 4 montrent sur un four 1 à arc électrique, constitué d'une cuve 2 surmontée d'un couvercle 3 équipé d'électrodes 4 destinés à produire un arc électrique entre elles et le métal contenu dans le fond de la cuve 2, afin de fondre le métal et le maintenir en fusion.

La paroi périphérique 5 du four 1 est équipée d'un injecteur supersonique d'oxygène 10 d'axe X situé au-dessus du bain 6 de métal en fusion. L'axe X de l'injecteur 10 fait par rapport à la verticale 7 un angle γ compris entre 30° et 60°. Le nez 11 de l'injecteur 10, situé à l'intérieur de la cuve 2, se trouve au-dessus du bain 6 à une hauteur H = L x cos y. En outre, ainsi que cela est montré sur la figure 4, l'axe X de l'injecteur 10 peut présenter par rapport au plan radial vertical 8 de la cuve 2 qui passe par le nez 11 de l'injecteur 10 un angle δ.

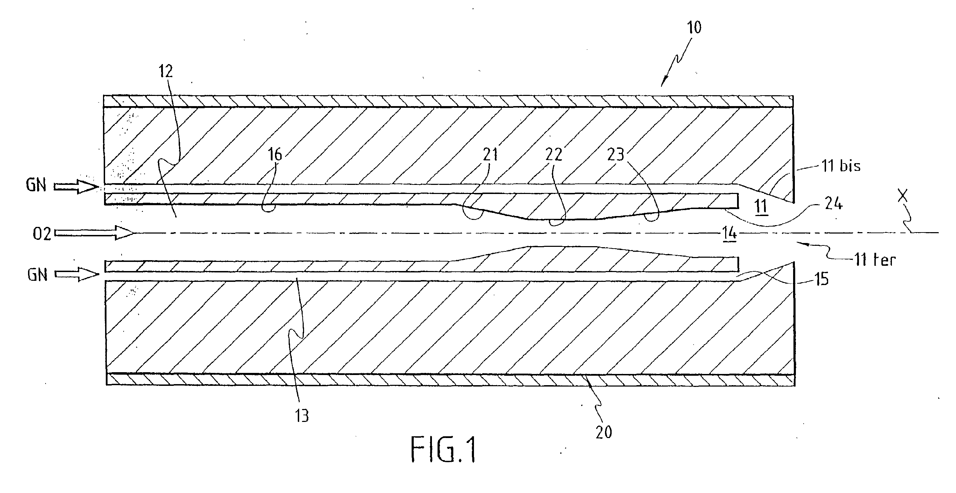

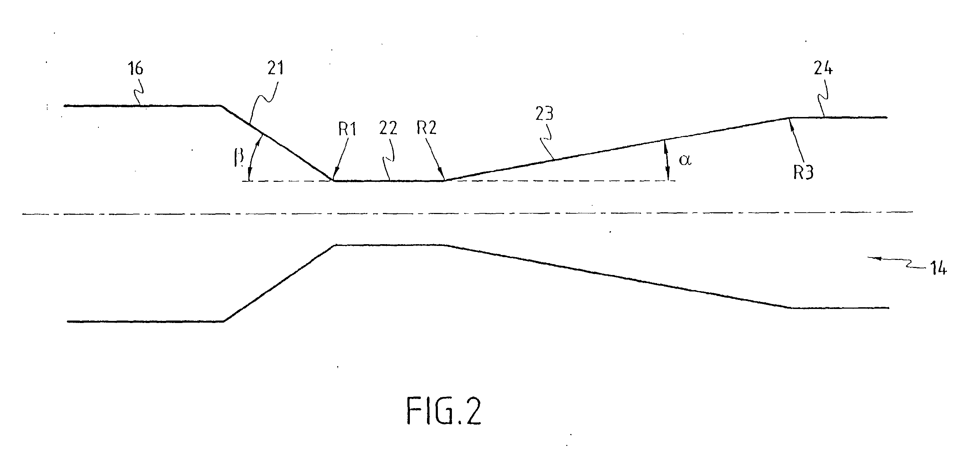

Les figures 1 et 2 montrent en détail la configuration de l'injecteur 10 selon l'invention. Cet injecteur comporte un conduit central 12 de révolution autour de l'axe X, et un conduit annulaire 13 d'axe X entourant à faible distance, le conduit central 12. Ces deux conduits 12 et 13 débouchent dans la chambre de pré-mélange 11 de l'injecteur 10 respectivement par un orifice circulaire 14 et un orifice annulaire 15. La chambre de pré-combustion 11 est équipée d'un convergent 11bis qui débouche sur le nez de l'injecteur 11ter. En fait, s'agissant de réaliser une flamme, il est important que les injections séparées d'oxygène et de combustible se mélangent rapidement pour obtenir une flamme stable, notamment. On peut donc soit faire converger les canalisations d'amenée de ces deux gaz dans la chambre de précombustion, qui peut alors avoir une forme substantiellement cylindrique, soit faire déboucher parallèlement ces deux gaz dans la chambre, dont les parois convergent, de manière à réaliser rapidement le mélange.

A cet effet, le conduit central 12 est délimité en amont par une paroi cylindrique 16 raccordée à une source d'oxygène non montrée sur les dessins, et en aval par une tuyère 20 type de Laval montrée en détail sur la figure 2.

Cette tuyère 20 présente d'amont en aval (dans le sens d'écoulement du gaz) un convergent 21, un col 22 où la vitesse de l'oxygène devient sonique, un divergent 23 où la vitesse de l'oxygène devient supersonique et une partie droite 24, qui débouche par l'orifice 14 et qui a pour but de stabiliser le jet d'oxygène. Les dimensions des différentes portions de la tuyère 20 et la pression à l'entrée de la tuyère 20 sont calculées en fonction du débit désiré d'oxygène et de la vitesse de sortie souhaitée du jet par l'orifice 14, de telle manière que le jet traverse le laitier et pénètre dans le bain 6 durant la phase d'affinage et de telle manière que la pression statique de l'oxygène à la sortie de l'injecteur 11ter soit sensiblement égale à la pression de l'atmosphère régnant dans le four 1.

Les angles $\alpha$ et $\beta$ que font respectivement les génératrices du divergent 23 et du convergent 21 avec l'axe X et qui sont en fait les demi-angles au sommet du divergent 23 et du convergent 21 ont une importance particulière. L'angle $\alpha$ doit être compris entre 2° et 12° et l'angle $\beta$ doit être compris dans l'intervalle de 20-35°.

Pour une tuyère 20 très optimisée, les angles $\alpha$ et $\beta$ ont pour valeur respective 4° et 20°. Afin de ne pas engendrer de chocs dans l'écoulement de l'oxygène, la tuyère 20 ne doit pas présenter de discontinuités géométriques, c'est pourquoi les arêtes vives du col 22 et du divergent 23 sont remplacées par des surfaces de raccordement arrondies ayant des rayons de courbures référencés R1, R2 et R3 sur la figue 2.

Les valeurs préférées pour les rayons de courbure R1, R2 et R3 sont les suivantes :

$$R1 = \frac{Dcol}{2}\frac{1}{tg\beta} + \frac{1}{sin\beta}$$

$$R2 = \frac{Dcol}{2}\frac{1}{tg\alpha} + \frac{1}{sin\alpha}$$

$$R3 = \frac{Dcol}{2}\frac{1}{tg\alpha} + \frac{1}{sin\alpha}$$

De préférence en mode supersonique, la vitesse du jet d'oxygène à la sortie de la tuyère est comprise entre 1,5 et 2,5 Mach. Le débit du jet supersonique est de préférence compris entre 50 et 4000 Nm³/h et préférentiellement entre 1000 et 3500 Nm³/h. Un Nm³ de gaz correspond à un volume de gaz mesuré dans les conditions dites "normales" de temps et de pression (273 K et P.atmosphérique).

La chambre de pré-mélange 11 est dimensionnée de telle sorte que son diamètre en amont soit au moins égal à celui de la couronne annulaire 15. Cette chambre est constituée d'un convergent 11bis dont le demi-angle est compris entre 0 et 25° et dont la longueur est comprise entre 1 et 5 fois le diamètre de sortie de la tuyère de Laval. Ce convergent 11bis débouche sur le nez de l'injecteur 11ter.

Lorsqu'on utilise l'injecteur 10 pour fournir à une vitesse subsonique de l'oxygène pour la combustion du gaz naturel GN, le débit maximum d'oxygène est sensiblement divisé par 5, et l'injecteur 10 fonctionne en mode brûleur. Le canal annulaire 13 est conçu de telle sorte que la vitesse du gaz naturel est proche de celle de l'oxygène délivré par la sortie 14. La vitesse de la flamme est de préférence comprise entre 150 m/s et Mach 1. La puissance de la flamme est de préférence comprise entre 0,5 et 5 MW. Le débit du gaz naturel est sensiblement égal à la moitié du débit d'oxygène pour avoir une flamme stoechiométrique.

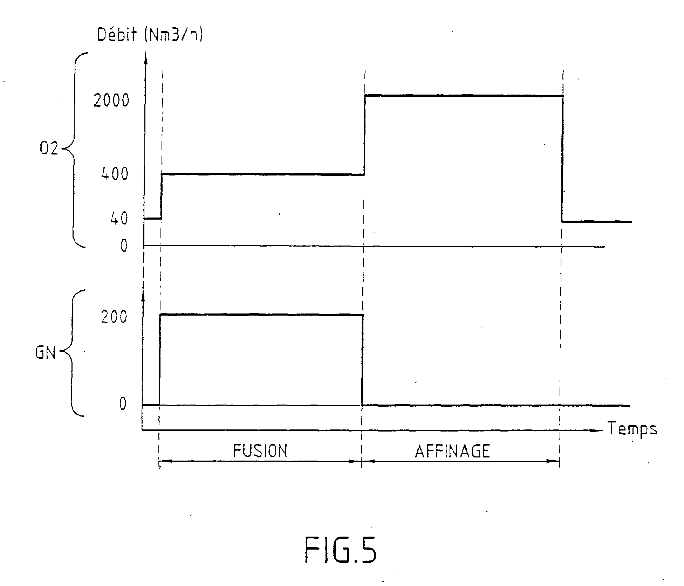

La figure 5 donne un exemple d'utilisation d'un injecteur 10, ayant une tuyère supersonique 20 dont la forme est telle qu'elle permet de délivrer 2000 Nm³/h à Mach 2, 1 à sa sortie, à une pression de 10⁵ Pascals et une température de 300 K, dans un four à arc électrique.

En mode veille, on l'utilise pendant les périodes où la tuyère n'est pas utile, et pour éviter tout risque de bouchage par aspersion accidentelle de l'extrémité par du métal fondu, un faible débit d'oxygène (40 Nm³/h par exemple) passe à travers la tuyère 20. En mode brûleur, on pourra par exemple se limiter à un débit de 400 Nm³/h d'oxygène de façon subsonique.

On injecte donc 200 Nm³/h de gaz naturel GN pour avoir une flamme stoechiométrique d'une puissance de 2 MW, au début de la phase de fusion du métal. Dans cet exemple, on a choisi une vitesse de sortie du gaz naturel proche de celle de l'oxygène et aux environs de 250 m/s.

En mode lance, c'est-à-dire pendant la phase d'affinage de l'acier, la tuyère 20 débite 2000 Nm³/h à Mach 2, 1. Il n'y a pas de débit de gaz naturel pendant le fonctionnement de la tuyère en mode lance.

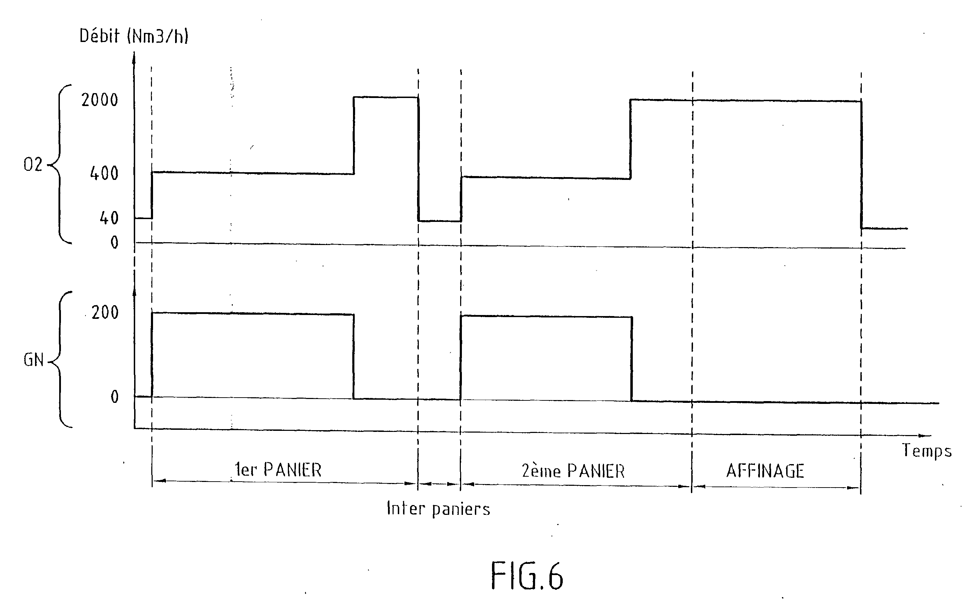

La figure 6 donne un autre exemple d'utilisation d'un injecteur 10, ayant une tuyère 20 capable d'un débit de 2000 Nm³/h à Mach 2, 1, sur un four à arc électrique, dans lequel on introduit deux paniers successifs. En mode veille un faible débit d'oxygène passe à travers la tuyère 20 (avec ou sans faible débit correspondant de gaz naturel dans la couronne périphérique). En mode lance, la tuyère 20 débite 2000 Nm³/h à Mach 2, 1.

En mode brûleur, on ne peut passer que 400 Nm³/h d'oxygène de façon subsonique. On injecte donc 200 Nm³/h de gaz naturel, à une vitesse voisine de celle de l'oxygène, et on obtient une flamme stoechiométrique d'une puissance de 2MW. Pendant la période de fusion, au début de chaque panier, l'injecteur 10 est utilisé en mode brûleur et lorsque la quantité de ferrailles diminue, l'injecteur 10 est ensuite utilisé en mode lance. Pendant la période d'affinage, l'injecteur 10 est utilisé en mode lance.

Dans les deux exemples d'utilisation décrits ci-dessus, la tuyère 20 délivre de l'oxygène à vitesse subsonique lorsqu'elle est en mode brûleur, et délivre de l'oxygène de façon supersonique lorsqu'elle est en mode lance.

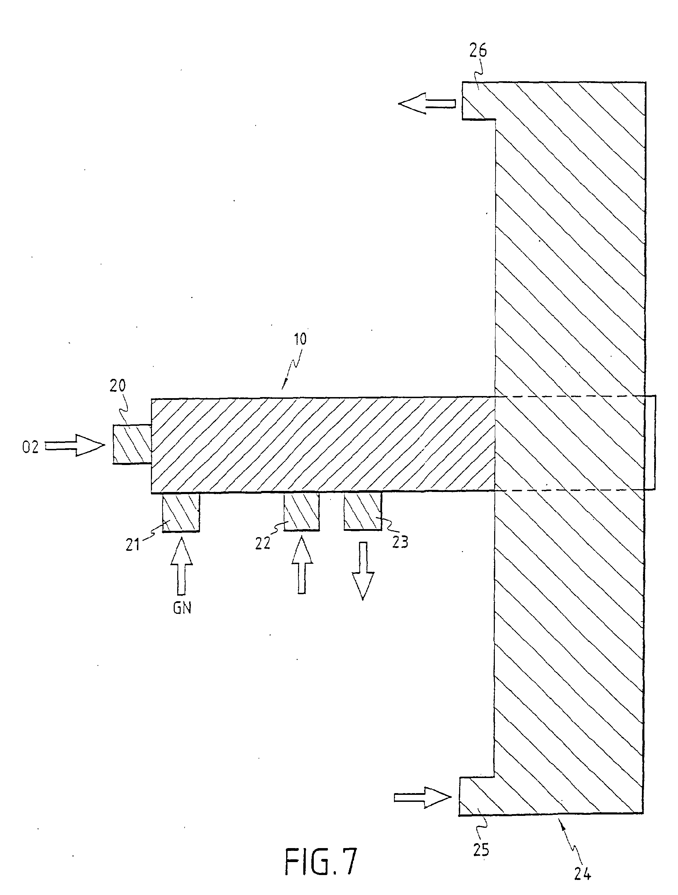

La figure 7 montre l'installation de l'injecteur 10 sur une paroi refroidie du four 1. L'injecteur 10 présente un raccord 20 pour l'alimentation de l'oxygène et un raccord 21 pour l'alimentation du gaz naturel GN. Il est en outre équipé d'un circuit interne de refroidissement par eau qui présente une entrée 22 et une sortie 23 d'eau raccordés à un circuit externe.

La partie de l'injecteur 10 refroidie à l'eau est disposée dans un échangeur de chaleur en cuivre 24 refroidi par de l'eau entrant par le raccord 25 et sortant par le raccord 26.

Cet échangeur 24 est monté dans la paroi périphérique 5 de la cuve 2.

Exemple de réalisation :

Exemple d'application numérique dans un four à arc électrique :

On choisit M = 2,2 correspondant à une valeur adaptée à l'injection d'oxygène dans l'acier. Cette vitesse est réalisable dans toutes les aciéries, aux débits habituellement utilisés. Elle représente un bon compromis en la pression et le débit disponibles, et la vitesse du jet.

$$\text{Débit volumique} = 5000 \ \text{Nm}^3/\text{h}$$

$$\text{Jet d'O2 (masse molaire} = 0{,}032 \ \text{kg/mole)}$$

$$\text{T ambiante (à l'intérieur du four)} = 2000\text{K}$$

On trouve pour ce cas, L = 1,93 m. Le débit pris en exemple, correspond à un débit communément employé en aciérie, sur un four à arc électrique, dont le tonnage est supérieur à 100 tonnes. Il permet d'injecter une quantité significative d'oxygène, compte tenu du temps d'utilisation de l'injecteur au cours d'une coulée. Le débit de l'injecteur est fonction des conditions locales de chaque aciérie, il dépend du type de four, du tonnage de la charge, de son mode de marche, de son type de chargement.

Ce calcul est donné à titre d'exemple pour montrer les performances de l'invention, dans la configuration de l'exemple.

**Revendications**

**1.** Procédé d'injection d'un gaz tel que de l'oxygène, à l'aide d'une tuyère dans un bain de métal liquide, contenu dans un récipient métallurgique, ladite tuyère étant installée dans la paroi latérale dudit récipient et orientée selon un angle $\alpha$ par rapport à la verticale, l'extrémité avale de la tuyère par où s'échappe le gaz en direction du bain de métal liquide étant située à une distance L de la surface du métal liquide, ladite tuyère étant alimentée par ledit gaz qui pénètre dans la tuyère par son extrémité amont à une pression P1 et étant éjecté de la tuyère par son extrémité avale à une pression P2, **caractérisé en ce que** ledit gaz est éjecté de ladite tuyère dans le récipient métallurgique de manière à ce que la pression avale P2 et la pression P3 dans le récipient métallurgique soient reliées entre elles par la relation :

$$0{,}9 \ P3 \leq P2 \geq 1{,}1 \ P3,$$

la distance L entre l'extrémité avale de la tuyère et la surface du métal liquide soit égale à

$$L(m) = C * \sqrt{qe} \pm 0{,}15(m)$$

Avec

$$C = \sqrt{\frac{4}{\pi * P_2 * M}} \left[ \frac{\gamma}{RTo} (1 + \frac{\gamma - 1}{2} M^2) \right]^{-1/4} * \left[ 4.2 + 1.1 * (M^2 + 1 - \frac{T_j}{T_a}) \right] \sqrt{\frac{\rho_j}{\rho_a}}$$

Expression dans laquelle :

$P_2$ : pression du jet en sortie, qui est égale à la pression dans le récipient métallurgique,

**M** : nombre de Mach calculé selon la formule suivante :

$$M^2 = \frac{2}{(\gamma - 1)} * \left[ \left( \frac{P_1}{P_2} \right)^{(\frac{\gamma - 1}{\gamma})} - 1 \right]$$

$T_o$ : température de l'oxygène( K)

$\gamma$ : rapport $C_p/C_v$, $C_p$ et $C_v$ étant respectivement les capacités thermiques molaires à pression ou volume constant,

**R** : constante des gaz parfaits ( 8.314 / Masse molaire 02)

**qe** : débit massique ( kg/s) = ***débit volumique (Nm3/h)\* masse molaire de l'oxygène/3600/0.0224 (l/mol)***

$T_j$, température en sortie de tuyère (K)

$\rho_j$: masse volumique du jet en sortie de tuyere (kg/m$^3$) calculée par :

$$\frac{P_2}{R * T_j}$$

$T_a$, température du milieu ambiant (K)

$\rho_a$ : masse volumique du milieu ambiant (kg/m$^3$) calculée par : $\frac{P_3}{R * T_a}$

l'injection de gaz étant réalisée lorsque la température des gaz dans l'enceinte métallurgique est supérieure à 800 °C, de préférence 1000 °C.

2. Procédé d'injection selon la revendication 1, **caractérisé en ce que** le gaz est choisi parmi l'oxygène, l'azote, l'argon, l'hydrogène, le monoxyde de carbone, le dioxyde de carbone, les alcanes, alcènes, alcynes, le gaz naturel, l'hexafluorure de soufre, pris seuls ou en mélanges.

3. Procédé selon l'une des revendications 1 ou 2, **caractérisé en ce que** la vitesse du gaz lors de son éjection par la tuyère est supersonique.

4. Procédé selon l'une des revendications 1 à 3, **caractérisé en ce que** la tuyère d'injection de gaz est une tuyère comportant d'amont en aval, selon la direction d'entraînement du gaz, une partie amont tronconique convergente suivie d'une partie centrale cylindrique, suivie d'une partie avale tronconique divergente débouchant sur l'atmosphère du récipient métallurgique, le rapport des angles au sommet des cônes respectivement convergent et divergent étant compris entre environ 1,5 et 2,5.

5. Procédé selon l'une des revendications 1 à 4, **caractérisé en ce que** l'angle $\alpha$ est tel que :

$$30° \leq \alpha \leq 60°$$

et de préférence $\alpha = 45° \pm 5°$

**6.** Procédé d'injection selon la revendication 1 ou 5, **caractérisé en ce que** le métal est de l'acier et le gaz d'injection de l'oxygène.

**7.** Procédé selon l'une quelconque des revendications 1 à 6, **caractérisé en ce que** le gaz injecté dans le métal est un hydrocarbure ou un mélange d'hydrocarbures gazeux, de préférence du gaz naturel.

**8.** Procédé selon l'une des revendications 1 à 7, **caractérisé en ce que** l'injection de gaz est réalisé en alternance avec l'injection d'une flamme dans le récipient métallurgique depuis une paroi du récipient en direction du métal solide et/ou liquide présent dans le récipient.

**9.** Procédé selon l'une des revendications 1 à 8, **caractérisé en ce que** l'injection de gaz est réalisée simultanément avec celle d'une flamme dans le récipient métallurgique depuis une paroi du récipient en direction du métal solide et/ou liquide présent dans le récipient.

**10.** Procédé selon l'une des revendications 1 à 9, **caractérisé en ce que** la tuyère (20) est une tuyère dite de Laval qui présente d'amont en aval un convergent (21), un col (22) où la vitesse de l'oxygène devient sonique, un divergent (23) où la vitesse du gaz injecté devient supersonique et une partie droite (24) dans laquelle le jet de gaz est stabilisé, ladite tuyère (20) étant dimensionnée en fonction du débit et de la vitesse de sortie désirés du jet de gaz, la pression du gaz à l'entrée de la tuyère étant telle que la pression du jet de gaz à la sortie de la tuyère est sensiblement égale à la pression de l'atmosphère environnante.

**11.** Procédé selon la revendication 1 à 10, **caractérisé en ce que** la tuyère (20) présente des surfaces de raccordement arrondies entre respectivement le convergent (21), le col (22), le divergent (23) et la partie droite (24).

**12.** Procédé selon l'une quelconque des revendications 1 à 11, **caractérisé en ce que** le demi-angle au sommet du convergent (21) est compris entre 2 et 12° et le demi-angle au sommet du divergent (23) est compris entre 15° et 35°.

**13.** Procédé selon l'une quelconque des revendications 1 à 12, **caractérisé en ce que** la vitesse du jet supersonique du gaz en sortie de tuyère est comprise entre 1,5 et 2,5 Mach.

**14.** Procédé selon l'une quelconque des revendications 1 à 13, **caractérisé en ce que** le débit de gaz est compris entre 50 et 5 000 Nm$^3$/h et de préférence entre 1000 et 3 500 Nm$^3$/h.

**15.** Procédé selon l'une quelconque des revendications 1 à 14, **caractérisé en ce que** l'on accélère la fusion du métal en brûlant un gaz naturel au début de la période de fusion du métal, le gaz naturel étant introduit par un canal annulaire (13) entourant la tuyère (20), et l'oxygène nécessaire pour la combustion du gaz naturel étant injecté par la tuyère (20).

**16.** Procédé selon la revendication 15, **caractérisé en ce que** pendant la période d'accélération de la fusion l'oxygène sort de la tuyère à une vitesse subsonique.

**17.** Procédé selon l'une des revendications 14 ou 15, **caractérisé en ce que** la vitesse de la flamme est comprise entre 150 m/s et 300 m/s.

**18.** Procédé selon l'une quelconque des revendications 14 à 16, **caractérisé en ce que** la puissance de la flamme est comprise entre 0,5 et 5MW.

**19.** Procédé selon l'une quelconque des revendications 16 à 18, **caractérisé en ce que** le ratio des débits d'oxygène délivrés par l'injecteur en mode supersonique et en mode brûleur est sensiblement égal à 5.

FIG.1

EP 1 179 602 A1

FIG.2

EP 1 179 602 A1

FIG.3

FIG.4

FIG.5

FIG.6

FIG.7

EP 1 179 602 A1

# DOCUMENTS CONSIDERES COMME PERTINENTS

RAPPORT DE RECHERCHE EUROPEENNE

Office européen des brevets

Numéro de la demande
EP 01 40 1806

| Catégorie | Citation du document avec indication, en cas de besoin, des parties pertinentes | Revendication concernée | CLASSEMENT DE LA DEMANDE (Int.Cl.7) |
|---|---|---|---|
| D,A | GB 623 881 A (LINDE AIR PRODUCTS COMPANY, LIVERPOOL, GB) 24 mai 1949 (1949-05-24) * the whole document * | 1-19 | C21C5/46 C21C5/52 |
| A | EP 0 866 139 A (PRAXAIR TECHNOLOGY INC, DANBURY, US) 23 septembre 1998 (1998-09-23) * colonne 2, ligne 2 - ligne 9 * * colonne 3, ligne 46 - ligne 50 * * figure 1 * | 1-19 | |
| A | EP 0 802 262 A (NIPPON STEEL CORP, TOKYO, JP) 22 octobre 1997 (1997-10-22) * page 11, ligne 37 - page 12, ligne 7 * | 1-19 | |

DOMAINES TECHNIQUES RECHERCHES (Int.Cl.7)

C21C
C22B

Le présent rapport a été établi pour toutes les revendications

| Lieu de la recherche | Date d'achèvement de la recherche | Examinateur |
|---|---|---|
| LA HAYE | 7 décembre 2001 | Peis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

**ANNEXE AU RAPPORT DE RECHERCHE EUROPEENNE
RELATIF A LA DEMANDE DE BREVET EUROPEEN NO.**   EP 01 40 1806

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-12-2001

| Document brevet cité au rapport de recherche | | Date de publication | Membre(s) de la famille de brevet(s) | | Date de publication |
|---|---|---|---|---|---|
| GB 623881 | A | 24-05-1949 | AUCUN | | |
| EP 0866139 | A | 23-09-1998 | US | 5883917 A | 16-03-1999 |
| | | | BR | 9800905 A | 28-09-1999 |
| | | | CN | 1198525 A | 11-11-1998 |
| | | | EP | 0866139 A1 | 23-09-1998 |
| | | | JP | 10259413 A | 29-09-1998 |
| | | | US | 6125133 A | 26-09-2000 |
| | | | ZA | 9807865 A | 02-03-1999 |
| EP 0802262 | A | 22-10-1997 | JP | 8188816 A | 23-07-1996 |
| | | | JP | 8246017 A | 24-09-1996 |
| | | | JP | 8157928 A | 18-06-1996 |
| | | | JP | 8165508 A | 25-06-1996 |
| | | | JP | 8283820 A | 29-10-1996 |
| | | | AU | 693630 B2 | 02-07-1998 |
| | | | AU | 4357196 A | 24-07-1996 |
| | | | EP | 0802262 A1 | 22-10-1997 |
| | | | KR | 227066 B1 | 15-10-1999 |
| | | | US | 6017380 A | 25-01-2000 |
| | | | CA | 2209647 A1 | 11-07-1996 |
| | | | CN | 1168157 A ,B | 17-12-1997 |
| | | | WO | 9621047 A1 | 11-07-1996 |

EPO FORM P0460